# EUROPEAN PATENT APPLICATION

(11) **EP 1 145 898 A1**
(43) Date of publication of application: **17.10.2001**
(21) Application number: 01303263.6
(22) Date of filing: 06.04.2001
(51) Int. Cl.: B60N 2/28

(54) **Tether strap for a rotating safety seat**

(30) Priority: 14.04.2000 AU PQ688200
(71) Applicant: Britax Child-Care Products Pty Ltd., Sunshine, Melbourne 3020 (AU)
(72) Inventor: Lumley, Michael Andrew, Torquay, Victoria 3228 (AU); Maciejczyk, Wieslaw, Sunshine, Victoria (AU)
(74) Representative: Hollinghurst, Antony

(57) **Abstract**

A tether arrangement for the combination of a base (11) and safety seat (10) where the safety seat (10) is rotatably attached to the base (11) which has a vertical back support (13) and an aperture or apertures (15) in said back support (13). A tether strap (16) is located through the aperture or apertures (15) and there is at least one length adjuster (20) on said tether strap (16) and a tether connector (18) on the tether strap (16) for attachment to an anchor point. Attachment means (22) on said safety seat (10) allow the tether strap (16), when lengthened, to attach to the safety seat when said safety seat is positioned in a rearward facing position, the tether strap acting to restrain either said base or safety seat when it is facing forwardly and to restrain said safety seat when it is facing rearwardly.

## Description

### FIELD OF INVENTION

This invention relates safety seats for use in motor vehicles and particularly for safety seats for infants. Such safety seats require tether seats and this invention particularly relates to a tether strap for a rotating safety seat, of the type where the safety seat is rotatably attached to a base member. The base member is secured to a vehicle seat usually by existing vehicle safety belt systems and the safety seat is able to be rotated through 180° with respect to the base between forward and rearward facing positions.

### BACKGROUND OF THE INVENTION

This type of safety seat normally has a pair of planar or frame supports where one support is positioned horizontally, the other vertically. One of the surfaces abuts against the squab of the vehicle seat and the other abuts against the backrest of the vehicle seat.

The safety seat is rotatably secured to the base so that it can rotate from a forward facing position to a rearward facing position.

This invention is directed to providing tether straps which can secure the safety seat and base combination to an anchorage point in either the rear or forward facing position.

### BRIEF DESCRIPTION OF THE INVENTION

In one form therefore the invention is said to reside in a tether arrangement for the combination of a base and safety seat, where the safety seat is rotatably attached to the base, the combination having a base having a vertical back support and a safety seat pivotally attached to said base so that it rotates between a forward and rearward facing position, wherein the tether arrangement comprises,
an aperture or apertures in said back support,
a tether strap locating through said aperture or apertures,
at least one length adjuster on said tether strap,
a tether connector on said tether strap for attachment to an anchor point, and
attachment means on said safety seat that allows said tether strap, when lengthened, to attach to said safety seat when said safety seat is positioned in a rearward facing position, said tether strap acting to restrain either said base or safety seat when it is facing forwardly and to restrain said safety seat when it is facing rearwardly.

Preferably the tether strap includes a single length of webbing which extends through two apertures in the back support of the base so that when the safety seat is in its forward facing position, the base is restrained from movement with respect to the vehicle seat.

The tether strap may be adapted to be lengthened so that it extends around a head end of the safety seat when it is in its rearward facing position whereby the same tether strap can be used in either the rear or forward facing position of the safety seat.

There may be guides provided on the head end of the safety seat to receive and support the tether strap where it passes around the rear of the safety seat when the safety seat is in the rearward facing position.

In an alternative arrangement there may be first coupling elements provided on either side of a head end of the safety seat and second coupling elements provided on the ends of the tether strap and wherein the respective ends of the tether strap extend through respective apertures in the back support to allow the respective first and second coupling elements to interengage when the safety seat is in the forward facing position and the tether strap may be adapted to be lengthened whereby the second coupling elements can also be engaged to the first coupling elements when the safety seat is rotated to its rearward facing position.

Preferably the first coupling elements comprise buckles and the second coupling elements comprise tongues for location and engagement within the buckles.

Alternatively, combinations of two and three-bar slides may also be used.

### BRIEF DESCRIPTION OF THE DRAWINGS

In order to fully understand the invention, preferred embodiments will be described below. However, it should be realised that the scope of the invention is not to be limited to the details of these preferred embodiments.

The embodiments are illustrated in the accompanying figures in which:
Figure 1 is a perspective view showing a base, safety seat and tether strap with the safety seat in a forward facing position,
Figure 2 is the same embodiment as shown in Figure 1 with the safety seat facing in a rearward position,
Figure 3 is a second embodiment showing a perspective view of a base, safety seat and tether strap, and
Figure 4 is the second embodiment with the safety seat facing in a rearward direction.

### DESCRIPTION OF PREFERRED EMBODIMENTS

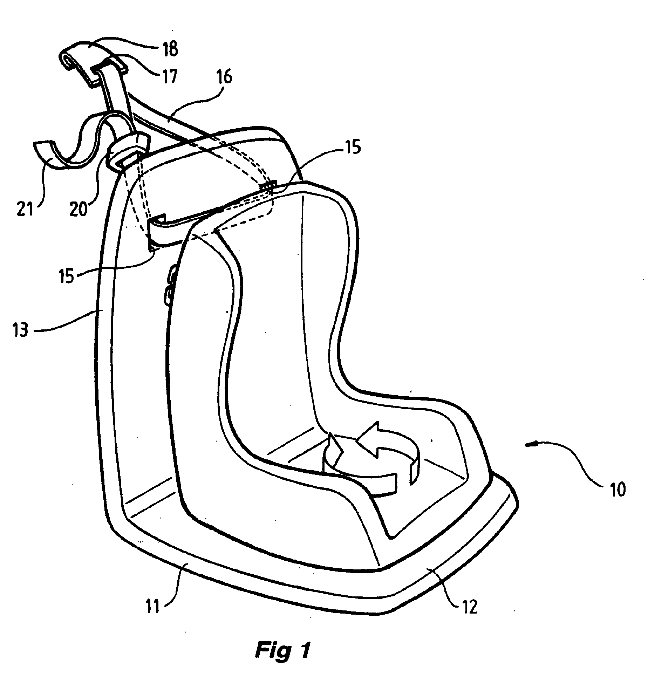

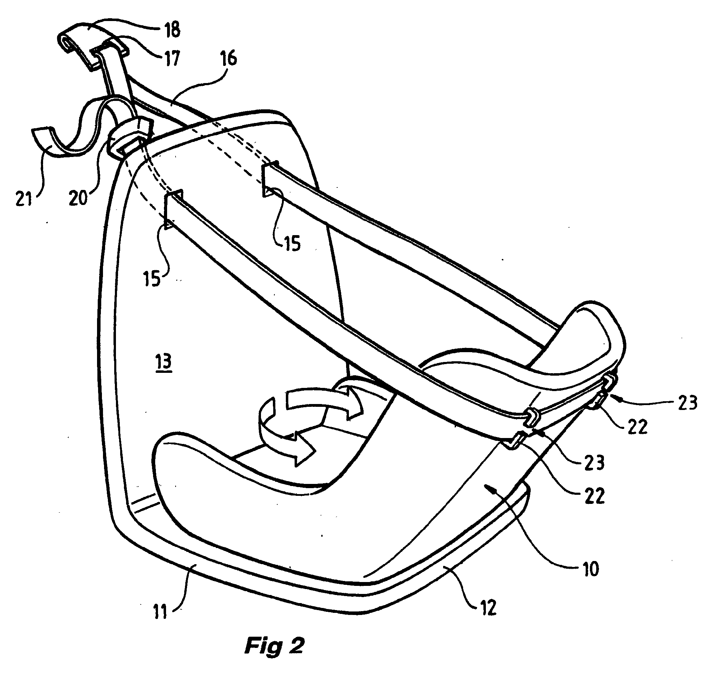

Figure 1 shows a combination of a safety seat 10 secured to a base 11. The safety seat 10 is pivotally attached to the base 11 so that it can rotate between a forward facing position as shown in Figure 1 to a rearward facing position as shown in Figure 2.

The base comprises a horizontal portion 12 and a back support which in this embodiment comprises a back board 13. Alternatively, the back support and/or base may comprise a metal or moulded frame. The horizontal portion 12 rests on the squab of a vehicle seat with the back board 13 abutting against the backrest of the vehicle seat. The vehicle seat belt (not shown) is drawn across the back board 13 and is used to secure the base 11 to the vehicle seat.

The back board 13 has a pair of apertures 15 through which a tether strap 16 is located. The tether strap 16 forms a loop which extends through each of the apertures 15 and through an aperture 17 in a tether connector 18. The ends of the tether strap 16 are joined by a length adjuster 20 which is of a conventional nature that has a wedging action to grip one end of the strap 16. The wedging action can be released by pulling the free end 21 of the strap 16. Although a pair of apertures 15 are used in this embodiment, a single aperture or opening may be used provided the tether strap 16 can be secured to the back board 13.

In the arrangement shown in Figure 1, the tether strap 16 holds the back board 13 with respect to an anchorage point to which the tether connector 18 is attached. This restrains the combination of both the safety seat 10 and the base 11.

When the safety seat is rotated to a rearward facing position as shown in Figure 2, the tether strap 16 can be lengthened and located around the head end of the safety seat 10. The safety seat 10 is provided with attachment means which in this embodiment comprise guides 22. Each guide 22 has an opening 23 to enable the straps 16 to be located in each of the guides 22. The tether strap 16 is then retensioned via the length adjuster 20 so that the head end of the safety seat 10 is held with respect to the anchor point to which the tether connector 18 is attached.

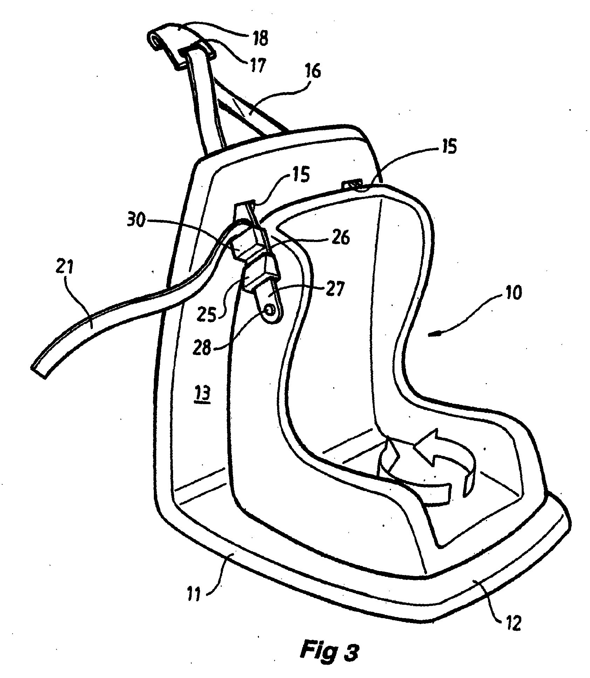

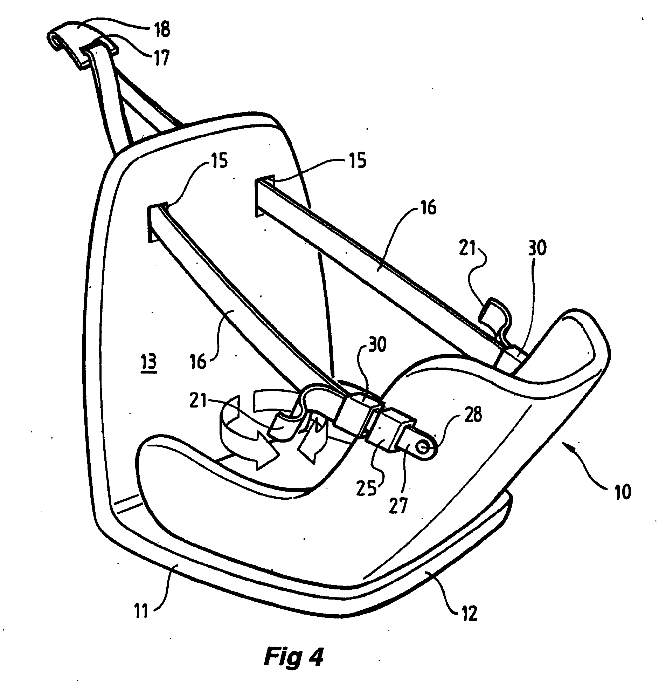

An alternative embodiment is illustrated in Figures 3 and 4. In this embodiment the head end of each side of the safety seat 10 is provided with a coupling comprising a buckle 25 and a coupling element which comprises a tongue 26 that is inserted into the buckle 25. The buckle 25 has a spring loaded catch which engages the tongue 26 which is releasable via depressing the latch release which is on the external surface of the buckle 25. The buckle 25 is attached to the safety seat via a short length of webbing 27 which is pivotally attached to the safety seat via a rivet 28. This enables the short length of webbing 27 and the buckle 25 to rotate with respect to the rivet 28.

The tongue connectors 26 are attached to each end of the tether strap 16. Each tongue coupling 26 has a length adjuster 30 which enables each side of the tether strap to be shortened or lengthened. As with the length adjuster 20 in the first embodiment, the length adjuster 30 shown in Figures 3 and 4 uses a friction element to grip the tether strap 16 which is freed by pulling the loose end 21. This then enables the tether strap 16 to be either shortened or lengthened.

Figure 3 shows a combination of the safety seat 10 and base 11 with safety seat 10 in a forward facing position. The safety seat 10 can be rotated to a rearwardly facing position as shown in Figure 4. The tether strap 16 is disconnected prior to the rotation of the safety seat 10, and then, by rotating the short length of webbing 27 and buckle 25, the tether strap 16 after lengthening, can be reattached to the buckles 25.

Apertures 15 are shown in the back board 13, but could also comprise a single slot or opening as there is no need to secure the tether strap 16 with respect to the back board 13.

In this embodiment, the tether strap 16 is used to secure the head end of the safety seat 10 both in forward and rearward facing directions. A significant advantage of the second embodiment when the safety seat 10 is in a rearward facing position is the ability to disconnect one side of the tether strap to provide easier access for placing or removing an occupant of the safety seat 10. The buckle 25 provides quick and easy disconnection and reconnection.

Throughout this specification various indications have been given as to the scope of this invention but the invention is not limited to any one of these but may reside in two or more of these combined together. The examples are given for illustration only and not for limitation.

Throughout this specification and the claims that follow unless the context requires otherwise, the words 'comprise' and 'include' and variations such as 'comprising' and 'including' will be understood to imply the inclusion of a stated integer or group of integers but not the exclusion of any other integer or group of integers.

## Claims

1. A tether arrangement for the combination of a base and safety seat, where the safety seat is rotatably attached to the base, the combination having a base having a vertical back support and a safety seat pivotally attached to said base so that it rotates between a forward and rearward facing position, wherein the tether arrangement comprises:
an aperture or apertures in said back support,
a tether strap locating through said aperture or apertures,
at least one length adjuster on said tether strap,
a tether connector on said tether strap for attachment to an anchor point, and
attachment means on said safety seat that allows said tether strap, when lengthened, to attach to said safety seat when said safety seat is positioned in a rearward facing position, said tether strap acting to restrain either said base or safety seat when it is facing forwardly and to restrain said safety seat when it is facing rearwardly.

2. A tether arrangement as in Claim 1 wherein the tether strap includes a single length of webbing which extends through two apertures in the back support of the base whereby when the safety seat is in its forward facing position, the base is restrained from movement with respect to the vehicle seat.

3. A tether arrangement as in Claim 2 wherein the tether strap is adapted to be lengthened so that it extends around a head end of the safety seat when it is in its rearward facing position.

4. A tether arrangement as in Claim 3 wherein guides are provided on the head end of the safety seat to receive and support the tether strap where it passes around the rear of the safety seat when in the rearward facing position.

5. A tether arrangement as in Claim 1 wherein first coupling elements are provided on either side of a head end of the safety seat and second coupling elements are provided on the ends of the tether strap and wherein the respective ends of the tether strap extend through respective apertures in the back support to allow the respective first and second coupling elements to interengage and the tether strap is adapted to be lengthened whereby the second coupling elements can also be engaged to the first coupling elements when the safety seat is rotated to its rearward facing position.

6. A tether arrangement as in Claim 5 wherein the first coupling elements comprise buckles and the second coupling elements comprise tongues for location and engagement within the buckles.
